# EUROPÄISCHE PATENTANMELDUNG

(11) **EP 2 477 291 A1**
(43) Veröffentlichungstag der Anmeldung: **18.07.2012**
(21) Anmeldenummer: 12075002.1
(22) Anmeldetag: 05.01.2012
(51) Int. Cl.: H02G 3/08, H02G 3/16, H01R 29/00

(54) **Elektrische Anschlussdose für ein Photovoltaikmodul**

(30) Priorität: 14.01.2011 DE 102011009005
(71) Anmelder: SOLON SE, 12489 Berlin (DE)
(72) Erfinder: Schwarze, Sascha, 12277 Berlin (DE); Totzek, Marcel, 10499 Berlin (DE)

(57) **Zusammenfassung**

Bekannte Anschlussdosen legen die Ausrichtung der externen Anschlusskabel des Photovoltaikmoduls, die fest mit einem Dosendeckel verbunden sind, fest. Bei der erfindungsgemäßen Anschlussdose (01) kann der Dosendeckel (04) in zwei oder mehr verschiedenen Aufsatzstellungen auf den Dosensockel (03) aufgesetzt werden, wobei für jede Aufsatzstellung ein positiver Kontakt (05) und ein negativer Kontakt (08) im Dosensockel (03) vorgesehen sind. Im Dosendeckel (04) sind ein positiver Gegenkontakt (23) und ein negativer Gegenkontakt (24) angeordnet. Erfindungsgemäß sind die Kontakte (05, 08) und die Gegenkontakte (23, 24) so positioniert, dass in jeder Aufsatzstellung des Dosendeckels (04) auf dem Dosensockel (03) der positive Gegenkontakt (23) mit einem der positiven Kontakte (05) und der negative Gegenkontakt (24) mit einem der negativen Kontakte (08) elektrisch kontaktierbar ist. Erfindungsgemäß wird die Aufsatzstellung des Dosendeckels (04) auf dem Dosensockel (03) nach einer vorgegebenen Ausrichtung der Anschlusskabel (30, 32) zum Photovoltaikmodul (02) ausgewählt. Durch die Erfindung können Anschlussdosen (01) vormontiert und durch Auswahl der Aufsatzstellung und damit Ausrichtung der Anschlusskabel (30, 32) an jedes Photovoltaikmodul (02) angepasst werden.

## Beschreibung

Die Erfindung bezieht sich auf eine elektrische Anschlussdose für ein Photovoltaikmodul mit einem Dosensockel mit zumindest einem ersten und einem zweiten positiven Kontakt zur Kontaktierung des Pluspols des Photovoltaikmoduls und zumindest einem ersten und einem zweiten negativen Kontakt zur Kontaktierung des Minuspols des Photovoltaikmoduls und einem Dosendeckel mit zumindest einem positiven Gegenkontakt und zumindest einem negativen Gegenkontakt, wobei die Gegenkontakte die polungsgleichen Kontakte nach Aufsetzen des Dosendeckels auf den Dosensockel in zumindest einer Aufsatzstellung kontaktieren, und mit einem mit dem zumindest einem positiven Gegenkontakt verbundenen positiven Anschlusskabel und einem mit dem zumindest einen negativen Gegenkontakt verbundenen negativen Anschlusskabel, die unter einer festen Abgangsrichtung am Dosendeckel befestigt sind.

Ein Photovoltaikmodul, auch PV-Modul, Solarmodul oder Solarzellenmodul, besteht im Wesentlichen aus einer Matrix von über Zell- und Querverbinder elektrisch miteinander verschalteten Solarzellen und dient der direkten Stromerzeugung aus Sonnenlicht durch photoelektrische Effekte in photoaktiven Materialien. Zwischen dem Pluspol und dem Minuspol eines Photovoltaikmoduls kann ein Gleichstrom abgegriffen werden. Dieser Abgriff erfolgt über eine elektrische Anschlussdose, auch Verbindungsdose, in der die modulinternen Leiterbänder, beispielsweise Querverbinder, von den Solarzellen mit externen Anschlusskabeln elektrisch kontaktiert sind. Über die externen Anschlusskabel wird das Photovoltaikmodul am Montageort mit weiteren Photovoltaikmodulen zur Erhöhung der nutzbaren Ausgangsspannung oder mit einem Wechselrichter vor dem Verbraucher elektrisch verschaltet. Die elektrische Anschlussdose besteht in der Regel aus einem Dosendeckel und einem Dosensockel, der auf die Ober- oder Unterseite des Photovoltaikmoduls bzw. auf dessen Substrat oder Laminat, in dem die Solarzellen eingeschweißt sind, in dessen Randbereich aufgeschraubt, aufgeklebt oder einlaminiert wird. Der Dosensockel umfasst Kontakte zum Anschluss an die Leiterbänder bzw. Querverbinder, in der Regel die Anschlusskabel nebst Zugentlastungen, Schutzelemente zur Verhinderung eines Rückwärtsbetriebs des Photovoltaikmoduls bei Beschädigung oder Beschattung einzelner Solarzellen und Verbindungselemente zur Montage auf dem Substrat oder Laminat des Photovoltaikmoduls. Der Dosendeckel dient als Schutzelement dem Verschluss des Dosensockels nach dessen Montage auf dem PV-Modul gegen Witterungseinflüsse und zur elektrischen Betriebssicherheit. Nach der Verbindung der Kontakte im Dosensockel mit Leiterbahnen im Photovoltaikmodul werden Gegenkontakte, die mit den Anschlusskabeln elektrisch leitend verbunden sind, mit den Kontakten elektrisch leitend verbunden. Dies kann noch im unverschlossenen Dosensockel oder durch Aufsetzen des Dosendeckels erfolgen, wenn die Gegenkontakte und die Anschlusskabel im bzw. am Dosendeckel angeordnet sind. Je nach Anordnung der Gegenkontakte sind die Anschlusskabel entsprechend mit dem Dosensockel oder dem Dosendeckel fest verbunden. Anschließend wird der Dosendeckel mit dem Dosensockel fest verbunden, sodass die Anschlussdose geschlossen ist. Das Eindringen von Feuchtigkeit wird durch vorheriges Ausgießen des Dosensockels mit einem Kunststoff oder durch Einlage einer Dichtung zwischen Dosensockel und Dosendeckel vermieden. Die Ausrichtung der von der Anschlussdose abgehenden Anschlusskabel ist bei bekannten Anschlussdosen für Photovoltaikmodule relativ dazu zwangsweise festgelegt. Deshalb müssen bislang die Anschlusskabel bei der weiteren Montage des Photovoltaikmoduls entsprechend verlegt werden. Weiterhin ist es nicht möglich, eine Anschlussdose bereits auf einem Laminat zu montieren, wenn das Laminat noch nicht konkret einem Photovoltaikmodul zugeordnet ist. Die Anschlussdose kann also erst in einem relativ späten Stadium der Produktion gesetzt werden, was die Produktionskosten erhöht.

### STAND DER TECHNIK

Der Stand der Technik, von dem die vorliegende Erfindung ausgeht, wird in der DE 10 2008 028 462 A1 offenbart, in der eine zweiteilige elektrische Anschlussdose für ein Photovoltaikmodul mit einem Dosensockel und einem Dosendeckel beschrieben wird. Im Dosensockel der Anschlussdose sind zwei positive und zwei negative Kontakte angeordnet, die entsprechend mit zwei positiven und zwei negativen Leiterbändern des Photovoltaikmoduls elektrisch leitend verbunden sind. Die Leiterbänder bilden entsprechend den Pluspol und den Minuspol des Photovoltaikmoduls. Im Dosendeckel der Anschlussdose sind zwei positive und zwei negative Gegenkontakte angeordnet, die im aufgesetzten Zustand des Dosendeckels auf den Dosensockel die entsprechend gleichpoligen Kontakte im Dosensockel elektrisch kontaktieren. Gleichpolige Kontakte im Dosensockel und Gegenkontakte im Dosendeckel sind jeweils über Stromschienen miteinander elektrisch leitend verbunden. Mit den beiden positiven Gegenkontakten ist ein positives Anschlusskabel, mit den beiden negativen Gegenkontakten ist ein negatives Anschlusskabel für das Photovoltaikmodul fest verbunden. Der Dosendeckel weist eine umlaufende Wandung auf, aus dem die Anschlusskabel seitlich herausgeführt sind. Die Anschlusskabel sind unter einer festen Abgangsrichtung am Dosendeckel befestigt. Dosensockel und Dosendeckel haben eine symmetrische rechteckige Form. Alle Kontakte sind entlang einer Längsseite im Dosensockel angeordnet. Die Gegenkontakte sind im Dosendeckel entlang der im aufgesetzten Zustand zur Längsseite im Dosensockel korrespondierenden Längsseite angeordnet. Zur Herstellung der Kontaktierung zwischen Kontakten und Gegenkontakten kann der Dosendeckel daher nur in einer einzigen Aufsatzstellung auf den Dosensockel aufgesetzt werden. Alle vier Kontakte und alle vier Gegenkontakte können nur in einer einzigen Aufsatzstellung des Dosendeckels auf den Dosensockel miteinander kontaktiert werden. Es ergibt sich eine entsprechende Ausrichtung der beiden Anschlusskabel durch deren feste Abgangsrichtung vom Dosendeckel. Die Ausrichtung der Anschlusskabel relativ zum Photovoltaikmodul muss daher mit anderen Mitteln erfolgen. Dies kann aber sehr aufwändig sein, da sich durch die vorhandene Vielzahl von verschiedenen Bauelementen auf dem Photovoltaikmodul oft nur ein äußerst eng begrenzter Verlegungsraum bzw. eine bevorzugte Ausrichtung für die Anschlusskabel ergibt. Insbesondere auch bei der elektrischen Verbindung zwischen einzelnen Photovoltaikmodulen kann es zu ungünstigen Ausrichtungen der Anschlusskabel kommen, die sehr lange Anschlusskabel erfordern.

Aus der DE 10 2008 048 443 A1 ist weiterhin eine Anschlussdose für ein Photovoltaikmodul bekannt, die kreisrund ausgebildet ist und aus einem modularen System aus einem Dosensockel, einem Dosendeckel und einer ringförmigen Dosenwandung besteht. Die Anschlusskabel sind unter einer vorgegebenen Abgangsrichtung fest mit der Dosenwandung verbunden. Aufgrund einer speziellen Innenstruktur in der Anschlussdose kann der Dosendeckel nur in einer einzigen Aufsatzstellung auf den Dosensockel aufgesetzt werden, sodass die Anschlusskabel wiederum nur in einer festen, vorgegebenen Ausrichtung von der Anschlussdose abgehen. Nur durch Austausch der gesamten Dosenwandung gegen eine andere Dosenwandung mit einer anderen festen Anordnung der Anschlusskabel können andere Ausrichtungen der Anschlusskabel erreicht werden.

Schließlich ist aus der DE 10 2008 022 049 A1 eine Anschlussdose für Photovoltaikmodule bekannt, bei der die Kontaktierung ebenfalls durch Aufsetzen des Dosendeckels erreicht wird. Zusätzlich befinden sich im Dosendeckel weitere Funktionselemente, wie beispielsweise Bypassdioden, Kühlelemente oder Membranen für einen Gastaustausch des Doseninneren.

Außerdem ist aus der DE10 2004 048 770B4 eine Gehäuseanordnung aus mindestens zwei Verbindungsdosen zum Anschluss eines elektrischen Geräts bekannt. Dabei geht von jeder Verbindungsdose ein elektrisches Anschlusskabel mit fester Abgangsrichtung ab. Um die Ausrichtung der Anschlusskabel zueinander und relativ zum elektrischen Gerät wählen zu können, sind die Verbindungsdosen quadratisch ausgebildet und können in vier verschiedenen, jeweils um 90° zueinander gedrehten Positionen aufeinander montiert werden. Dadurch ergibt sich aber bereits für zwei Anschlusskabel eine relative hohe Bauhöhe, sodass ein Einsatz eines solchen Konzepts mit gestapelten Anschlussdosen bei einem Photovoltaikmodul nicht in Frage kommt, da es möglichst flach sein soll.

### AUFGABENSTELLUNG

Die AUFGABE für die vorliegende Erfindung ist daher darin zu sehen, die gattungsgemäße elektrische Anschlussdose für ein Photovoltaikmodul so weiterzubilden, dass sich eine besonders einfache und kostengünstige Ausrichtbarkeit der Anschlusskabel ergibt. Die erfindungsgemäße LÖSUNG für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Bei der Erfindung wird die gestellte Aufgabe dadurch gelöst, dass der Dosendeckel in zwei oder mehr verschiedenen Aufsatzstellungen auf den Dosensockel aufsetzbar ist. Für jede Aufsatzstellung sind ein positiver Kontakt und ein negativer Kontakt im Dosensockel vorgesehen. Erfindungsgemäß sind die Kontakte im Dosensockel und die Gegenkontakte im Dosendeckel so positioniert, dass in jeder Aufsatzstellung des Dosendeckels auf dem Dosensockel der positive Gegenkontakt im Dosendeckel mit einem der positiven Kontakte im Dosensockel und der negative Gegenkontakt im Dosendeckel mit einem der negativen Kontakte im Dosensockel elektrisch kontaktierbar ist. Die endgültige Aufsatzstellung des Dosendeckels auf dem Dosensockel wird dann erfindungsgemäß nach einer vorgegebenen Ausrichtung der Anschlusskabel zum Photovoltaikmodul ausgewählt. Bei der Erfindung kann also die Ausrichtung der Anschlusskabel nach den konkret vorhandenen Platzmöglichkeiten auf dem Photovoltaikmodul erfolgen. Weiterhin kann sie beispielsweise nach dem Gesichtspunkt möglichst kurzer Anschlusskabel bis zum Anschlussobjekt vorgenommen werden. Der Dosensockel kann völlig unabhängig vom zu produzierenden Photovoltaikmodul auf dem Laminat vormontiert werden. Die Ausrichtung der Anschlusskabel erfolgt dann am fertigen Photovoltaikmodul durch entsprechendes Aufsetzen des Dosendeckels mit den daran fest montierten Anschlusskabeln. Dabei kann für jede Aufsatzstellung derselbe Dosendeckel aufgesetzt werden, ebenso kann für jedes beliebige Photovoltaikmodul derselbe Dosendeckel benutzt werden, soweit immer der passende Dosensockel vormontiert wird. Somit ergibt sich eine besonders einfache und preisgünstige Möglichkeit der nahezu beliebigen Ausrichtung der Anschlusskabel an einem Photovoltaikmodul durch einfaches angepasstes Aufsetzen des Dosendeckels auf den Dosensockel einer Anschlussdose.

Prinzipiell sind bei der elektrischen Anschlussdose nach der Erfindung also ein Paar von gegenpoligen Gegenkontakten im Dosendeckel und entsprechend einer Anzahl n möglicher Aufsatzstellungen des Dosendeckels auf dem Dosensockel n Paare gegenpoliger Kontakte vorgesehen. Diese Definition wird im Weiteren so verwendet. Dabei ist jedoch nicht ausgeschlossen, dass jeder Gegenkontakt aus einer Anzahl m Einzelkontakten besteht. Dann weist entsprechend jeder Kontakt ebenfalls m Einzelkontakte auf. Im Dosensockel befinden sich somit m·n Einzelkontakte, wohingegen im Dosendeckel nur m Einzelkontakte angeordnet sind. Da aber alle Einzelkontakte elektrisch miteinander verschaltet sind, entsprechen sie letztendlich einem einzigen Kontakt bzw. Gegenkontakt.

Beim Aufsetzen des Dosendeckels auf den Dosensockel werden die Kontakte im Dosensockel mit den Gegenkontakten im Dosendeckel kontaktiert, sodass der von dem positiv geladenen Querverbinder im Photovoltaikmodul gebildete Pluspol des Photovoltaikmoduls mit dem positiven Anschlusskabel und der von dem negativ geladenen Querverbinder im Photovoltaikmodul gebildete Minuspol mit dem negativen Anschlusskabel elektrisch leitend verbunden ist. Für eine sichere Kontaktierung können die Kontakte im Dosensockel als Klemmkontakte ausgebildet sein, in die dann die als Messerkontakte ausgebildeten Gegenkontakte im Dosendeckel beim Aufsetzen des Dosendeckels auf den Dosensockel eingreifen und kontaktieren. Voraussetzung für diese Art der Kontaktierung ist das senkrechte Absetzen des Dosendeckels auf den Dosensockel. Alternativ können vorteilhaft die Kontakte oder die Gegenkontakte auch federnd im Dosensockel bzw. im Dosendeckel gelagert sein. Dadurch ergibt sich eine ausreichende Kontaktierungskraft. Außerdem ist ein seitliches Aufschieben der Gegenkontakte auf die Kontakte möglich. Ein exaktes vertikales Aufsetzen des Dosendeckels auf den Dosensockel ist dann nicht mehr erforderlich. Der Dosendeckel kann in einer ungefähren Aufsatzstellung auf den Dosensockel abgesetzt und anschließend seitlich zur Kontaktierung ausgerichtet werden.

In der Aufsatzstellung ist zur Abdichtung der Anschlussdose gegen Feuchtigkeit und zur elektrischen Absicherung der Anschlussdose bevorzugt vorteilhaft der Dosendeckel mit dem Dosensockel in einer Aufsatzstellung form- oder kraftschlüssig fest verbunden. Ein Formschluss kann durch entsprechende Arretierungsklemmen erreicht werden, bei denen beispielsweise elastisch verformbare Haken am Dosendeckel in elastisch verformbare Haken am Dosensockel eingreifen. Ein Kraftschluss zwischen Dosendeckel und Dosensockel kann beispielsweise mittels Reibschluss durch ein klemmendes Übergreifen des Dosendeckels über den Dosensockel erreicht werden. Ein (lösbares) Verkleben oder Verschrauben von Dosendeckel und Dosensockel zur Erzeugung des Kraftschlusses ist ebenfalls möglich.

Erfindungsgemäß kann der Dosendeckel auf den Dosensockel in unterschiedlichen Aufsatzstellungen aufgesetzt werden, wobei in jeder möglichen Aufsatzstellung die Kontaktierung zwischen den Kontakten im Dosensockel und den Gegenkontakten im Dosendeckel zuverlässig hergestellt wird. Dafür sind im Dosensockel so viele Paare aus positiven und negativen Kontakten vorgesehen wie Aufsatzstellungen vorgesehen sind. Im Dosendeckel befindet sich zumindest ein Paar von positiven und negativen Gegenkontakten, die dann in der ausgewählten Aufsatzstellung das korrespondierende Paar von Kontakten kontaktieren. Zur sicheren Kontaktierung ist eine genaue Festlegung der unterschiedlichen Aufsatzstellungen erforderlich. Bevorzugt sind die verschiedenen Aufsatzstellungen vorteilhaft durch Passstifte oder durch eine geometrische Passform zwischen Dosendeckel und Dosensockel festgelegt. Bei einer Verwendung von Passstiften werden entsprechend der Anzahl von unterschiedlichen Aufsatzstellungen Paare aus zwei in ihrer Form zueinander komplementären Passstiften eingesetzt, die an entsprechender Position im Dosendeckel und im Dosensockel angeordnet sind. Zu jeder Aufsatzstellung passt dann genau ein Passstift im Dosendeckel in nur genau einen Passstift im Dosensockel.

Alternativ können die unterschiedlichen Aufsatzstellungen auch durch eine geometrische Passform zwischen Dosendeckel und Dosensockel definiert werden. Dabei kann die geometrische Passform bevorzugt vorteilhaft zwischen einer umlaufenden Wandung des Dosensockels und einer umlaufenden Wandung des Dosendeckels erzeugt werden. Dabei kann die Wandung des Dosendeckels mit ihrer Innenseite die Außenseite der Wandung des Dosensockels umfassen. Hierbei handelt es sich um eine Ausgestaltung in Analogie zu einer Schachtel. Alternativ können auch die beiden Wandungen stirnseitig aufeinander stoßen und zueinander komplementäre Absätze oder Nuten und Federn aufweisen. Die geometrische Passform wird dann von den Absätzen bzw. Nuten und Federn erzeugt, wobei auch Dosendeckel und Dosensockel bevorzugt eine gleiche geometrische Form aufweisen.

Die geometrische Passform einer Schachtel wird vorteilhaft besonders gut umgesetzt, wenn bevorzugt Dosensockel und Dosendeckel eine regelmäßige geometrische Passform mit n>2 Ecken für n verschiedene, jeweils um 360°/n-Grad zueinander verdrehte Aufsatzstellungen aufweisen. Es ergeben sich regelmäßige n-Ecke, beginnend bei einem Dreieck, wobei diese Form eher selten für eine Anschlussdose umgesetzt wird, über ein Quadrat, Pentagon, Hexagon, Oktogon und so weiter. Die Anzahl n der Ecken bestimmt die Anzahl der unterschiedlichen Aufsatzpositionen. Entsprechend für jede Aufsatzposition ist ein Paar aus einem positiven und einem negativen Kontakt im Dosensockel vorgesehen, in Summe befinden sich also n positive und n negative Kontakte im Dosensockel. Dabei können die korrespondierenden Paare aus Kontakten direkt nebeneinander oder auch beliebig zueinander angeordnet sein. Ihre Anordnung zueinander wird von der Anordnung der beiden Gegenkontakte im Dosendeckel bestimmt, die in jeder Aufsatzstellung ein Paar Kontakte im Dosensockel kontaktieren.

Eine bevorzugte Ausführungsform sieht vor, dass Dosensockel und Dosendeckel in der regelmäßigen geometrischen Passform mit n=4 eines Quadrats für 4 verschiedene, jeweils um 90° verdrehte Aufsatzstellungen ausgebildet sind. Dabei können vorteilhaft der als Quadrat ausgebildete Dosensockel in jeder Ecke ein Paar aus einem positiven und einem negativen Kontakt und der als Quadrat ausgebildete Dosendeckel in einer Ecke ein Paar aus einem positiven und einem negativen Gegenkontakt aufweisen. Es ergibt sich eine sehr einfache und überschaubare Zuordnung der Kontakte und Gegenkontakte in den vier Ecken des Quadrats. Mit den Gegenkontakten im Dosendeckel sind die beiden Anschlusskabel fest verbunden. In der Regel erstrecken sich die Anschlusskabel in der Dosenebene, d.h. sie gehen seitlich vom Dosendeckel ab. Eine Erstreckung senkrecht vom Dosendeckel ist zwar ebenfalls möglich, ergibt aber nur eine begrenzte Lageänderung der Anschlusskabel zwischen den einzelnen Aufsatzpositionen. Eine solche Ausgestaltung kann aber beispielsweise bei einer Montage der Anschlussdose seitlich am Rahmen eines Photovoltaikmoduls, also senkrecht zur Modulebene, ihren Einsatz finden. Bei einer seitlichen Anordnung der Anschlusskabel von der Anschlussdose können bei deren quadratischer Ausführung die beiden Anschlusskabel also in vier verschiedenen Ausrichtungen von der Anschlussdose abgehen. Dabei können vorteilhaft das positive und das negative Anschlusskabel von dem als Quadrat ausgebildeten Dosendeckel von der der Ecke mit dem Paar aus einem positiven und einem negativen Gegenkontakt gegenüber liegenden Wandung abgehen. Es ergibt sich eine gute Handhabbarkeit des Dosendeckels beim Aufsetzen.

In einer anderen vorteilhaften Ausführungsform ist vorgesehen, dass Dosensockel und Dosendeckel in der regelmäßigen geometrischen Form mit n=8 eines Oktogons für 8 verschiedene, jeweils um 45° verdrehte Aufsatzstellungen ausgebildet sind. Dabei können der als Oktogon ausgebildete Dosensockel vor jeder Kante ein Paar aus einem positiven und einem negativen Kontakt und der als Oktogon ausgebildete Dosendeckel vor einer Kante ein Paar aus einem positiven und einem negativen Gegenkontakt aufweisen. Bevorzugt können das positive und das negative Anschlusskabel von dem als Oktogon ausgebildeten Dosendeckel von der der Kante mit dem Paar aus dem positiven und dem negativen Gegenkontakt gegenüberliegen Wandung abgehen. Gegenüber der zuvor genannten Ausführungsform ergeben sich bei dieser Ausführungsform mit einer achteckigen Anschlussdose acht verschiedene Aufsatzstellungen und damit acht verschiedene Ausrichtmöglichkeiten der beiden Anschlusskabel. Mit dieser Ausführungsform kann die Anschlussdose an nahezu jede Platzsituation auf einem Photovoltaikmodul angepasst und die Anschlusskabel optimal ausgerichtet werden.

Bei den Ausgestaltungen mit einer geometrischen Passform entspricht die Anzahl der Aufsatzstellungen und damit Orientierungen der Anschlusskabel der Anzahl n der Ecken. Mit steigender Anzahl der Ecken steigt die Anzahl der Ausrichtmöglichkeiten. Eine beliebige, d.h. kontinuierliche Ausrichtmöglichkeit der Anschlusskabel ergibt sich bevorzugt vorteilhaft dann, wenn Dosensockel und Dosendeckel in der regelmäßigen geometrischen Form mit n=∝ eines Kreises für unendlich viele Aufsatzstellungen ausgebildet sind. Entsprechend sind dann der positive Kontakt und der negative Kontakt als konzentrische Ringkontaktbahnen ausgebildet. Bei der Realisierung von beliebig vielen Aufsatzpositionen können die Anschlusskabel in jeder beliebigen Orientierung ausgerichtet werden. Die gewählte Aufsatzstellung zwischen Dosendeckel und Dosensockel wird bei der runden Ausführungsform dann aber nicht mehr automatisch wie bei der eckigen Passform fixiert. Bei der runden Ausführungsform ist der gewählten Aufsatzstellung daher entsprechend zu fixieren, beispielsweise durch eine Verschraubung. Alternativ kann die Fixierung der Aufsatzstellung aber auch zusammen mit der Herstellung der oben bereits erwähnten festen Verbindung zwischen Dosendeckel und Dosensockel erreicht werden.

Bei einer runden Ausbildung der Anschlussdose mit einer beliebigen Aufsatzstellung sind die Kontakte im Dosensockel als geschlossene Ringkontaktbahnen ausgebildet. Damit diese kreuzungs- und damit kurzschlussfrei verlaufen, sind die Ringkontaktbahnen konzentrisch ineinander angeordnet. Vorteilhaft können auch die Ausführungen mit n verschiedenen Aufsatzstellungen kreuzungsfreie Leiterbahnen aufweisen, wobei alle positiven Kontakte von einer Leiterbahn, die mit dem Pluspol verbunden ist, und alle negativen Kontakte von einer Leiterbahn, die mit dem Minuspol verbunden ist, erfasst werden. Bevorzugt wird hier eine Reihenschaltung der Kontakte umgesetzt. Dabei können die Kontakte als Klemmkontakte, wie oben beschrieben, oder einfach als Kontaktpunkte auf den Leiterbahnen ausgebildet sein. Im zweiten Fall sind die Gegenkontakte bevorzugt federnd ausgebildet, um die Kontaktierung sicher zu gewährleisten. Eine seitliche Ausrichtung der Gegenkontakte auf den Kontaktbahnen ist dann aber problemlos möglich. Alle positiven und negativen Kontakte in der Anschlussdose können aber auch mit Drähten entweder in Reihe oder parallel geschaltet werden. Drähte sind elektrisch isolierend ummantelt und können in einfacher Weise überkreuzt werden. Da der Dosensockel unabhängig vom Photovoltaikmodul vorgefertigt werden kann, können in einfacher Weise auch komplexere Verdrahtungen realisiert werden.

Eine Solarzelle wird unter Einfall von Sonnenlicht von einem Strom zwischen Plus- und Minuspol durchflossen. Bei zu geringem Sonneneinfall, beispielsweise durch Abschattung, kann es zu einer Umpolung und damit zu einem Rückwärtsstrom kommen. Dieser kann die Solarzelle und auch das gesamte Photovoltaikmodul schädigen. Zur Vermeidung von Rückwärtsströmen werden Bypassdioden eingesetzt, die nur eine Stromrichtung zulassen. Dabei kann jeder einzelnen Solarzelle eine Bypassdiode parallel geschaltet sein. Häufiger werden jedoch Bypassdioden zwischen den Plus- und Minuspol des gesamten Photovoltaikmoduls geschaltet. Der Pluspol eines Photovoltaikmoduls kann beispielsweise von einem ersten und einem zweiten positiven Querverbinder gebildet sein, der Minuspol entsprechend von einem ersten und einem zweiten negativen Querverbinder. Immer ein positiver Querverbinder liegt einem negativen Querverbinder unter Bildung eines Abstands gegenüber. In einen Abstand wird zwischen Plus- und Minuspol die Anschlussdose gesetzt. Zur Vermeidung eines Rückwärtsstroms durch das Photovoltaikmodul werden Bypassdioden in einer elektrischen Schaltung in den anderen Abstand und jeweils zwischen die gleichpoligen Querverbinder gesetzt. Grundsätzlich können die Bypassdioden im Dosensockel zwischen den Querverbindern angeordnet sein. Bevorzugt können die Bypassdioden aber auch im Dosendeckel vorgesehen sein. Damit die Bypassdioden aber in jeder Aufsatzstellung des Dosendeckels auf den Dosensockel in derselben elektrischen Schaltung zwischen den Querverbindern angeordnet sind, ist es besonders vorteilhaft, wenn die Bypassdioden auf einer verdreh- oder umsteckbaren Platine angeordnet sind. Durch eine entsprechende Rückdrehung oder Umstecken der Platine kann dadurch eine Verdrehung des Dosendeckels in eine andere Aufsatzposition gegenüber einer Grundposition kompensiert werden. Die Fixierung der Platine kann beispielsweise wieder über Passstifte oder über eine einfache Verschraubung erfolgen. Weiterhin können bevorzugt weitere Komponenten im Dosendeckel vorgesehen sein, die nicht in eine spezielle elektrische Schaltung integriert werden müssen. Hier kann es sich beispielsweise um Kühl- oder Filterelemente handeln. Weitere Details zu der elektrischen Anschlussdose nach der Erfindung sind den Ausführungsbeispielen zu entnehmen.

### AUSFÜHRUNGSBEISPIELE

Bevorzugte Ausbildungsformen der elektrischen Anschlussdose nach der Erfindung werden nachfolgend anhand der nicht maßstabsgerechten, schematischen Figuren näher erläutert. Dabei zeigt die
- **FIGUR 1**: eine quadratische Anschlussdose in geöffneter Darstellung,
- **FIGUR 2A..F**: die möglichen Aufsatzstellungen der quadratischen Anschlussdose,
- **FIGUR 3**: die möglichen Aufsatzstellungen der quadratischen Anschlussdose in Relation zum Photovoltaikmodul,
- **FIGUR 4A, B**: zwei Anordnungen des Photovoltaikmoduls aufgrund der möglichen Aufsatzstellungen,
- **FIGUR 5**: eine erste Ausführungsform der Anschlussdose bezüglich der Fixierung der Aufsatzstellung,
- **FIGUR 6**: eine zweite Ausführungsform der Anschlussdose bezüglich der Fixierung der Aufsatzstellung,
- **FIGUR 7**: einen Querschnitt der Anschlussdose mit einer Ausführungsform der Kontakte im Dosensockel,
- **FIGUR 8**: eine achteckige Anschlussdose in geöffneter Darstellung,
- **FIGUR 9**: eine runde Anschlussdose in geöffneter Darstellung und
- **FIGUR 10**: eine Ausführungsform der quadratischen Anschlussdose bezüglich Bypassdioden.

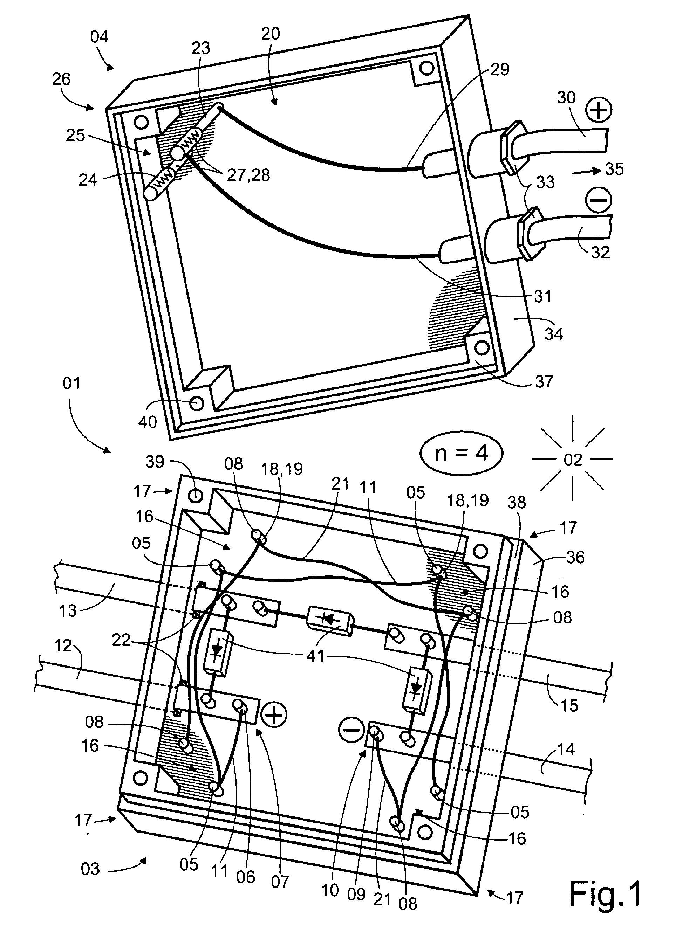

In der **FIGUR 1** ist eine elektrische Anschlussdose **01** für ein Photovoltaikmodul **02** (nur angedeutet) mit einem Dosensockel **03** und einem Dosendeckel 04 in geöffneter Form perspektivisch dargestellt. Dabei fällt der Blick in den Dosensockel **03** von oben und in den Dosendeckel **04** von unten. Dargestellt ist eine Ausführungsform der Erfindung mit **n = 4** verschiedenen Aufsatzstellungen mit einem Dosendeckel **04** und einem Dosensockel **03** in Form eines Quadrats **20.** Entsprechend sind im Dosensockel **03** vier positive Kontakte **05** mit einer Kontaktierung **06** des Pluspols **07** und vier negative Kontakte **08** mit einer Kontaktierung **09** des Minuspols **10** des Photovoltaikmoduls **02** vorgesehen. Die vier positiven Kontakte **05** sind mittels elektrisch isolierend ummantelten Drähten **11** elektrisch leitend miteinander in Reihe geschaltet und mit der Kontaktierung **06** verbunden. Die vier negativen Kontakte **08** sind ebenfalls mittels elektrisch isolierend ummantelten Drähten **21** elektrisch leitend miteinander in Reihe geschaltet und mit der Kontaktierung **09** verbunden. Aufgrund der elektrisch isolierenden Ummantelung können sich die Drähte **11** und **21** problemlos kreuzen. Die Darstellung der Anschlussdose **01** erfolgt im verschalteten Zustand mit dem Photovoltaikmodul **02.** Deshalb sind mit dem Pluspol **07** des Photovoltaikmoduls **02** ein erster positiver Querverbinder **12** und ein zweiter positiver Querverbinder **13** des Photovoltaikmoduls **02** elektrisch leitend verbunden. Mit dem Minuspol **10** des Photovoltaikmoduls **02** sind ein erster negativer Querverbinder **14** und ein zweiter negativer Querverbinder **15** elektrisch leitend verbunden. Dazu sind die Querverbinder **12, 13, 14, 15** über Schlitze **22** im Dosensockel **03** in dessen Inneres hineingeführt. Die Querverbinder **12, 13, 14, 15** sind in nicht dargestellter Weise in eine Reihenschaltung von Solarzellen im Photovoltaikmodul **02** elektrisch eingebunden (vergleiche beispielsweise DE 10 2009 039 370 A1, Darstellung 2). Zur Vermeidung eines Rückwärtsstroms sind zwischen die Querverbinder **12, 13, 14, 15** Bypassdioden **41** mit den angegebenen Durchlassrichtungen geschaltet.

Im dargestellten Ausführungsbeispiel sind vier Paare **16** aus jeweils einem positiven Kontakt **05** und einem negativen Kontakt **08** gebildet und in Ecken **17** des Dosensockels 03 angeordnet. Die Kontakte **05, 07** im Dosensockel **03** sind als Stiftkontakte **18** ausgebildet und weisen in ihren Stirnseiten Mulden **19** auf.

Im Dosendeckel **04** sind ein positiver Gegenkontakt **23** und ein negativer Gegenkontakt **24** dargestellt. Die beiden Gegenkontakte **23, 24** sind analog zu den Paaren **16** aus den Kontakten **05, 08** zu einem Paar **25** zusammengeführt und in einer Ecke **26** des Dosendeckels **04** positioniert. Die Gegenkontakte **23, 24** sind als federnde Stiftkontakte **27** ausgebildet, die stirnseitig eine Wölbung **28** aufweisen. Diese Wölbungen **28** werden im aufgesetzten Zustand des Dosendeckels **04** durch die Federkraft der federnden Stiftkontakte **27** in die Mulden **19** der Kontakte **05, 08** im Dosensockel **02** gedrückt, sodass sich eine sichere Kontaktierung ergibt. Der positive Gegenkontakt **23** ist über einen elektrisch isolierenden Draht **29** mit einem positiven Anschlusskabel **30** verbunden. Der negative Gegenkontakt **24** ist über einen elektrisch isolierenden Draht **31** mit einem negativen Anschlusskabel **32** verbunden. Die beiden Anschlusskabel **30, 32** sind über Zugentlastungen **33** in einer umlaufenden Wandung **34** des Dosendeckels **04** fest verbunden und weisen eine feste seitliche Abgangsrichtung **35** (Pfeil) auf.

Der Dosensockel **03** weist ebenfalls eine umlaufende Wandung **36** auf. Die umlaufende Wandung **34** des Dosendeckels weist einen stirnseitigen Absatz **37** auf, die umlaufende Wandung **36** des Dosensockels **03** weist einen dazu komplementären stirnseitigen Absatz **38** auf. Beim Aufeinandersetzen greifen die Absätze **37, 38** ineinander ein und fixieren den Dosendeckel **04** auf dem Dosensockel **03.** Dabei kann eine nicht weiter dargestellte Dichtung zwischengelegt werden. Anschließend können Dosendeckel **04** und Dosensockel **03** über eine (nicht dargestellte) Verschraubung mit einander fixiert werden, die in Bohrungen **39, 40** eingreift.

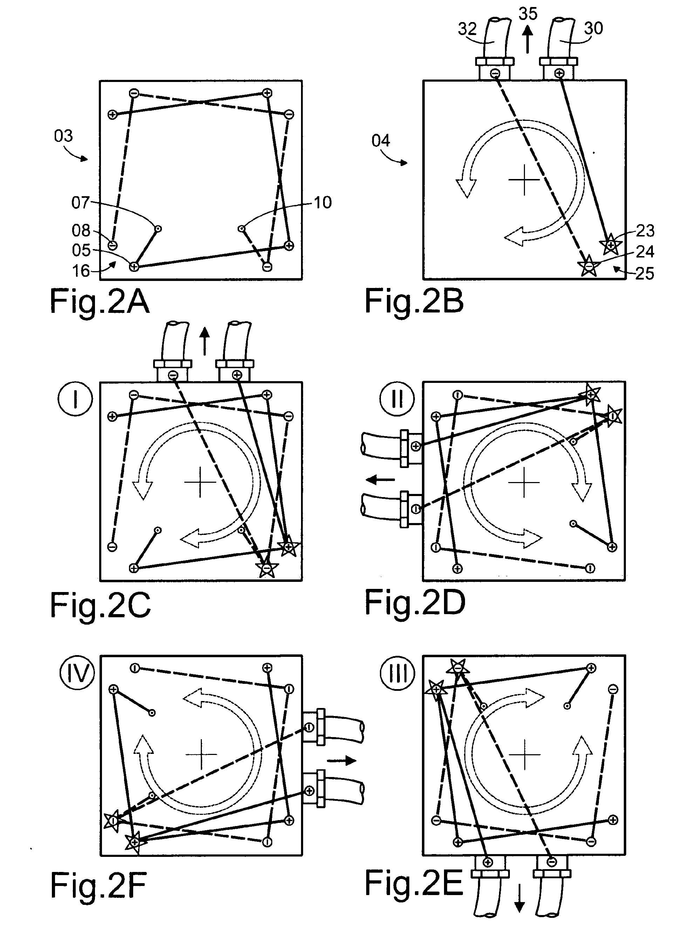

Nachfolgend werden die vier verschiedenen Aufsatzstellungen für die zuvor erläuterte quadratische Anschlussdose **01** beschrieben. Die **FIGUR 2A** zeigt den Dosensockel **03** mit vier Paaren **16** aus Kontakten **05, 08.** Die positiven Kontakte **05** sind mit dem Pluspol **07,** die negativen Kontakte **08** sind mit dem Minuspol **10** verbunden. Alle Kontakte **05, 08** sind jeweils in Reihe geschaltet.

Die **FIGUR 2B** zeigt den Dosendeckel **04** mit dem Paar **25** aus Gegenkontakten **23, 24** und den Anschlusskabeln **30, 32** mit der Abgangsrichtung **35.** Der gestrichelte Doppelpfeil deutet an, dass eine Drehung des Dosendeckels **04** in und entgegen dem Uhrzeigersinn möglich ist.

In der **FIGUR 2C** ist eine erste Aufsatzstellung I mit einer Abgangsrichtung **35** nach oben dargestellt. Das Paar **25** aus Gegenkontakten **23, 24** kontaktiert das Paar **16** aus Kontakten **05, 08** rechts unten. In der **FIGUR 2D** ist eine zweite Aufsatzstellung II mit einer Abgangsrichtung **35** nach links dargestellt. Die Aufsatzstellung II ergibt sich gegenüber der Aufsatzstellung I durch eine Drehung des Dosendeckels **04** von 90° entgegen dem Uhrzeigersinn. Das Paar **25** aus Gegenkontakten **23, 24** kontaktiert das Paar **16** aus Kontakten **05, 08** rechts oben. In der **FIGUR 2E** ist eine dritte Aufsatzstellung III mit einer Abgangsrichtung **35** nach unten dargestellt. Die Aufsatzstellung III ergibt sich gegenüber der Aufsatzstellung I durch eine Drehung des Dosendeckels **04** von 180° in oder entgegen dem Uhrzeigersinn. Das Paar **25** aus Gegenkontakten **23, 24** kontaktiert das Paar **16** aus Kontakten **05, 08** links oben. In der **FIGUR 2F** ist eine vierte Aufsatzstellung VI mit einer Abgangsrichtung **35** nach rechts dargestellt. Die Aufsatzstellung VI ergibt sich gegenüber der Aufsatzstellung I durch eine Drehung des Dosendeckels **04 von** 90° im dem Uhrzeigersinn. Das Paar **25** aus Gegenkontakten **23, 24** kontaktiert das Paar **16** aus Kontakten **05, 08** rechts unten.

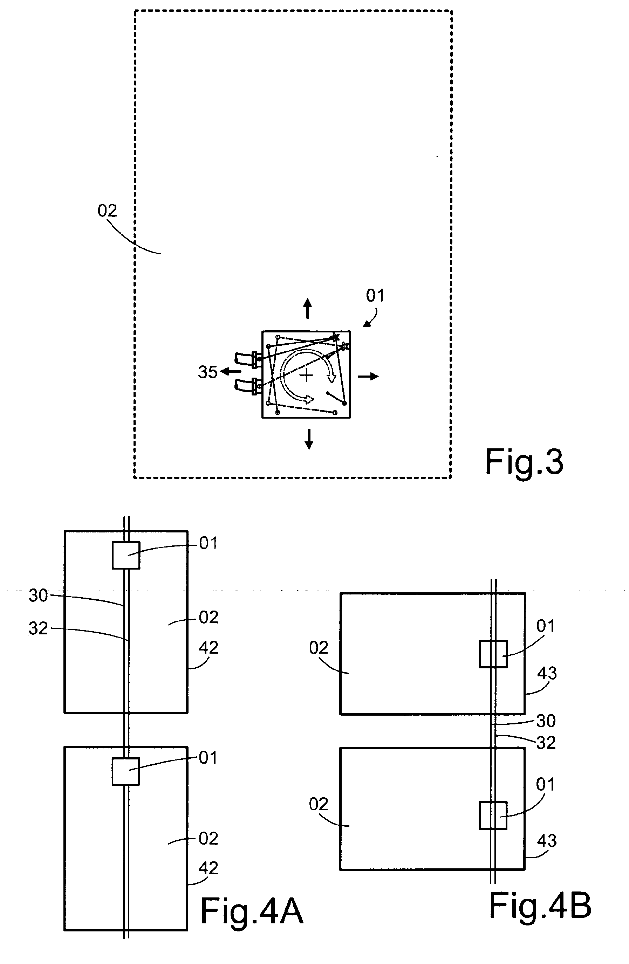

Die **FIGUR 3** zeigt die Anordnung der quadratischen Anschlussdose **01** auf dem Photovoltaikmodul **02** und zeigt die vier möglichen Abgangsrichtungen **35** der Abgangsleitungen **30, 32** in Relation zum Photovoltaikmodul **02.** In der **FIGUR 4A** ist eine Reihenschaltung von zwei Photovoltaikmodulen **02** über deren lange Längsseite **42,** in der **FIGUR 4B** ist eine Reihenschaltung von zwei Photovoltaikmodulen **02** über deren kurze Querseite **43** dargestellt. Es ist zu erkennen, dass die Anschlusskabel **30, 32** in **FIGUR 4B** deutlich kürzer sind als in **FIGUR 4A****.**

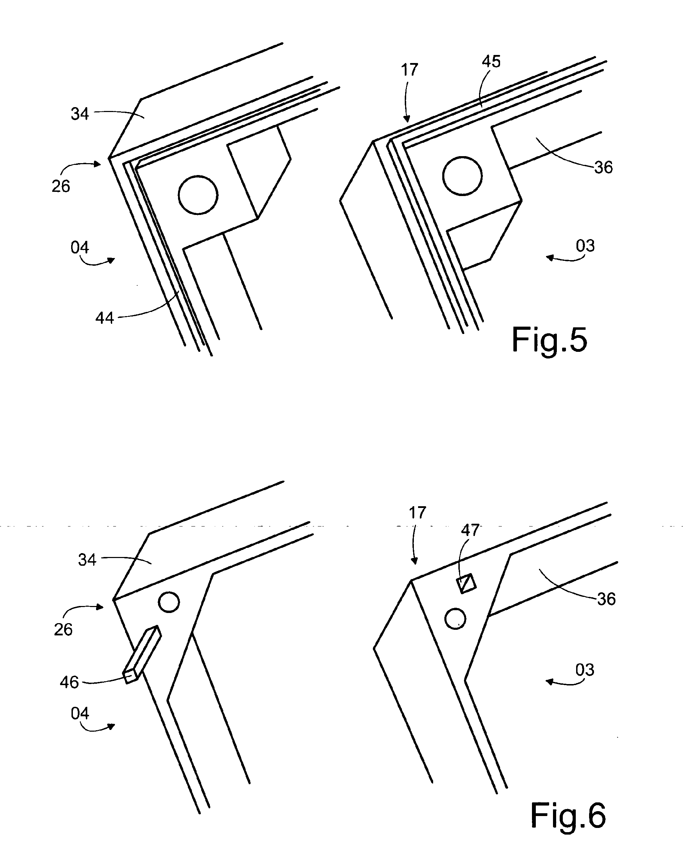

In der **FIGUR 5** ist die Ecke **26** des Dosendeckels **04** in der Wandung **34** bzw. die Ecke **17** des Dosensockels **03** in der Wandung **36** im Detail dargestellt. Bei dieser Ausführungsform weisen die Wandungen **34, 36** jedoch zur Festlegung der verschiedenen Aufsatzstellungen eine Nut **44** und eine Feder **45** auf, die aber ebenfalls eine genaue Passform der Wandungen **34, 36** von Dosendeckel **04** und Dosensockel **03** zueinander voraussetzen. In der **FIGUR 6** stoßen die Wandungen **34, 35** stirnseitig stumpf aufeinander und können damit nicht der Festlegung der verschiedenen Aufsatzstellungen dienen. Zu deren Festlegung weist der Dosendeckel **04** zumindest zwei Passstifte **46** (an gegenüberliegenden Ecken **26)** auf, die in entsprechende Passbohrungen **47** an allen vier Ecken **17** am Dosensockel **03** einpassbar sind.

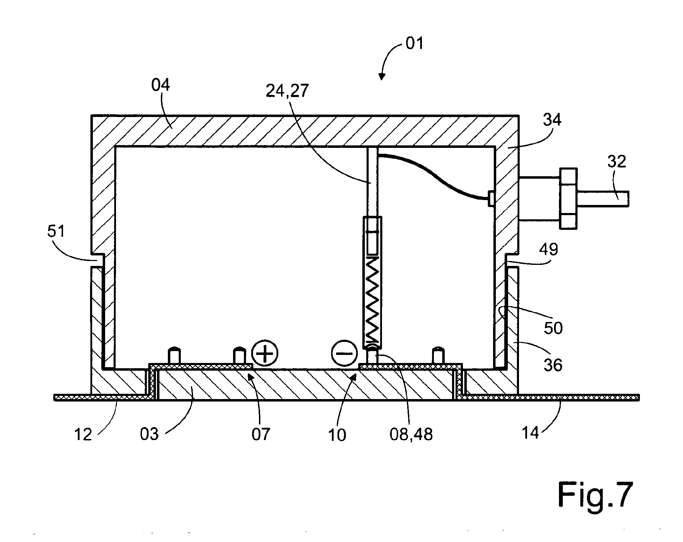

Die **FIGUR 7** zeigt schematisch einen Querschnitt durch die Anschlussdose **01.** Zu erkennen sind der Dosendeckel **04,** der Dosensockel **03,** die negative Anschlussleitung **32** und die Querverbinder **14** (mit dem Minuspol **10** verbunden) und **12** (mit dem Pluspol **07** verbunden). Im gezeigten Ausführungsbeispiel ist der negative Gegenkontakt **24** wiederum als federnder Kontaktstift **27** ausgebildet. Nunmehr ist der Kontakt **08** aber als einfacher Kontaktpunkt **48** ausgebildet, auf den der federnde Kontaktstift **27** einfach aufsetzt. Eine seitliche Ausrichtung ist möglich. Zu erkennen ist weiterhin, dass der Dosendeckel **04** mit einer Außenseite **49** seiner Wandung **34** eine Innenseite **50** der Wandung **36** des Dosensockels **03** berührt, sodass es zu einem festen Sitz kommt. Ein Spalt **51** zum Einlegen einer Dichtung ist ebenfalls vorgesehen.

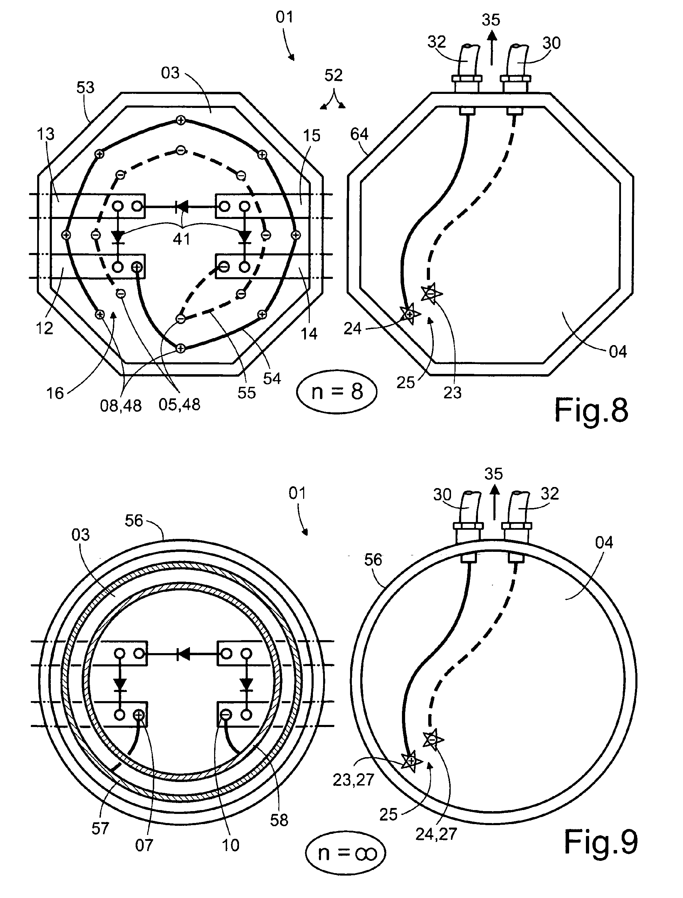

Die **FIGUR 8** zeigt ein Ausführungsbeispiel der Anschlussdose **01** mit **n = 8** Ecken, sodass ein Oktogon **52** entsteht. Dargestellt ist links der achteckige Dosensockel **03** mit acht Paaren **16** von Kontakten **05, 08,** die orthogonal zu Kanten **53** angeordnet sind. Eine parallele Anordnung ist ebenfalls ohne weiteres möglich. Die Kontakte **05, 08** sind als Kontaktpunkte **48** ausgebildet und liegen auf kreuzungsfreien Leiterbahnen **54, 55.** Zwischen den Querverbindern **12, 13, 14, 15** sind wiederum Bypassdioden **41** vorgesehen. Rechts ist der achteckige Dosendeckel **04** dargestellt, bei dem das Paar **25** aus Gegenkontakten **23, 24** ebenfalls orthogonal vor einer Kante **64** angeordnet sind. Es ergeben sich acht verschiedene, jeweils um 45° weitergedrehte verschiedenen Aufsatzmöglichkeiten des Dosendeckels **04** auf den Dosensockel **03** und damit acht verschiedene Abgangsrichtungen **35** der Anschlusskabel **30, 32.**

Die **FIGUR 9** zeigt eine Anschlussdose **01** in Form eines Kreises **56** (mit n = ∝). Im runden Dosensockel **03** sind zwei konzentrische Ringkontaktbahnen **57, 58** dargestellt, die mit dem Pluspol **07** bzw. dem Minuspol **10** des Photovoltaikmoduls **02** verbunden sind. Der runde Dosendeckel **04** ist ausgestaltet wie in **FIGUR 8** gezeigt und weist wiederum ein Paar **25** aus Gegenkontakten **23, 24** auf, die als federnde Kontaktstifte **27** ausgebildet sind. Der Dosendeckel **04** kann in jeder beliebigen Aufsatzstellung auf den Dosensockel **03** aufgesetzt werden, es ergeben sich beliebige viele Abgangsrichtungen **35** für die Anschlusskabel **30, 32** im Kreis **56.** Die Fixierung der ausgewählten Aufsatzstellung kann durch Passstifte (wie oben gezeigt) oder durch andere form- oder kraftschlüssige Maßnahmen getrennt von der Arretierung des Dosendeckels **04** auf dem Dosensockel **03** oder zusammen damit erfolgen.

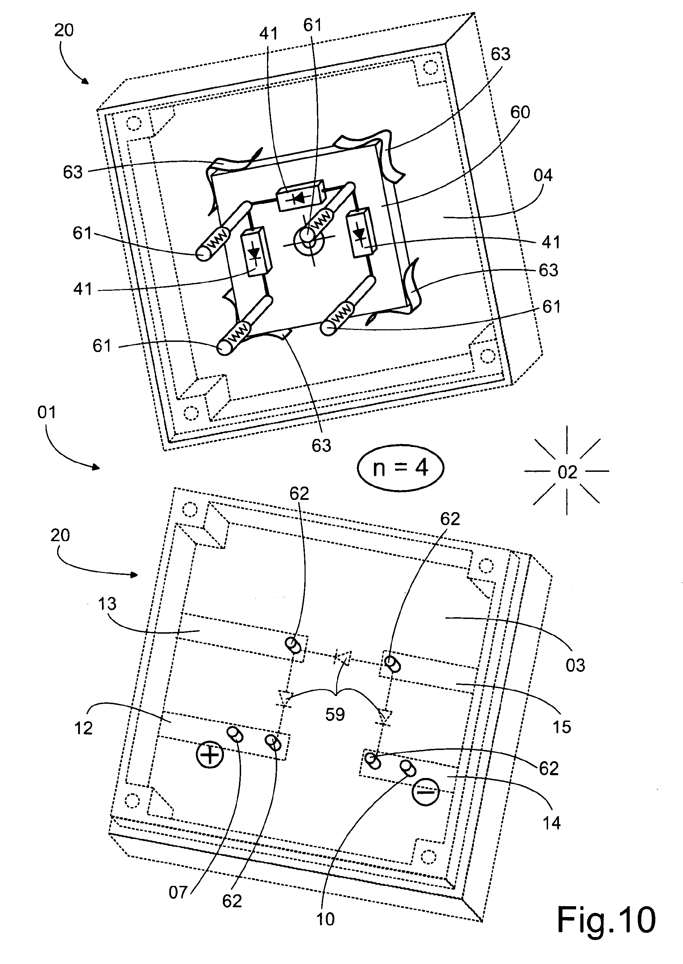

In den vorangehenden Ausführungsbeispielen sind die Bypassdioden **41** im Dosensockel **03** angeordnet. In der **FIGUR 10** ist eine mögliche Anordnung der Bypassdioden **41** im Dosendeckel **04** dargestellt. Die Bypassdioden **41** müssen die Querverbinder **12, 13, 14, 15** im Photovoltaikmodul **02** durch deren Verbindung mit dem Pluspol **07** und dem Minuspol **10** immer in einer gleichen elektrischen Verschaltung **59** verbinden (gestrichelt angedeutet, Durchlass- bzw. Sperrrichtungen siehe Bypassdioden **41**), um einen schädlichen Rückwärtsstrom durch das Photovoltaikmodul **02** sicher zu verhindern. Dies gilt auch bei einer Anordnung der Bypassdioden **41** im Dosendeckel **04,** der in unterschiedlichen Aufsatzstellungen gegenüber dem Dosensockel **03** positioniert werden kann. In der Figur **10** sind die Bypassdioden **41** auf einer Platine **60** angeordnet und über federnde Steckkontakte **61** verschaltet, die mit Steckgegenkontakten **62** im Dosensockel **03** elektrisch kontaktierbar sind (beispielsweise analog zu der Kontaktierung der Kontakte **05, 08** mit den Gegenkontakten **23, 24** gemäß **FIGUR 1****).** Die Steckgegenkontakte **62** sind entsprechend mit den Leiterbändern **12, 13, 14, 15** verbunden. Im gezeigten Ausführungsbeispiel ist die Platine **60** drehbar im Dosendeckel **04** gelagert und wird von Klemmfedern **63** fixiert, die mit dem Dosendeckel **04** verbunden sind. Die Platine **60** weist eine zum Dosendeckel **04** identische geometrische Form, im gezeigten Ausführungsbeispiel das Quadrat **20 (n=4),** auf, um die über die geometrische Passform bedingten Aufsatzstellungen kompensieren zu können. Zum Erreichen der gewählten Aufsatzstellung in der ursprünglichen Position zur Umsetzung der vorgegebenen Verschaltung **59** muss im dargestellten Beispiel die Platine **60** manuell gedreht oder umgesteckt werden. Die Klemmfedern **63** lassen ein Drehen über die Ecken der Platine **60** zu und fixieren diese dann nach dem Verdrehen wieder an anderen Ecken. Die Platine **60** muss soweit gedreht oder umgesteckt werden, dass bei einer gewünschten Aufsatzstellung des Dosendeckels **04** auf den Dosensockel **03** die vorgegebene Verschaltung **59** zwischen den Leiterbändern **12, 13, 14, 15** wieder korrekt hergestellt wird. Beim Aufsetzen des Dosendeckels 04 auf den Dosensockel **03** kontaktieren die Federkontakte **61** die Gegenkontakte **62**.

### BEZUGSZEICHENLISTE

- 01: elektrische Anschlussdose
- 02: Photovoltaikmodul
- 03: Dosensockel
- 04: Dosendeckel
- 05: positiver Kontakt
- 06: Kontaktierung von 07
- 07: Pluspol
- 08: negativer Kontakt
- 09: Kontaktierung von 10
- 10: Minuspol
- 11: Draht
- 12: erster positiver Querverbinder
- 13: zweiter positiver Querverbinder
- 14: erster negativer Querverbinder
- 15: zweiter negativer Querverbinder
- 16: Paar
- 17: Ecke von 03
- 18: Stiftkontakt
- 19: Mulde
- 20: Quadrat
- 21: Draht
- 22: Schlitz
- 23: positiver Gegenkontakt
- 24: negativer Gegenkontakt
- 25: Paar
- 26: Ecke von 04
- 27: Stiftkontakt
- 28: Wölbung
- 29: Draht
- 30: positives Anschlusskabel
- 31: Draht
- 32: negatives Anschlusskabel
- 33: Zugentlastung
- 34: Wandung von 04
- 35: Abgangsrichtung von 30, 31
- 36: Wandung von 03
- 37: Absatz
- 38: Absatz
- 39: Bohrung
- 40: Bohrung
- 41: Bypassdiode
- 42: lange Längsseite von 02
- 43: kurze Querseite von 02
- 44: Nut
- 45: Feder
- 46: Passstift
- 47: Passbohrung
- 48: Kontaktpunkt
- 49: Außenseite 49 von 34
- 50: Innenseite von 36
- 51: Spalt
- 52: Oktogon
- 53: Kante von 03
- 54: Leiterbahn
- 55: Leiterbahn
- 56: Kreis
- 57: positive Ringkontaktbahn
- 58: negative Ringkontaktbahn
- 59: elektrische Verschaltung
- 60: Platine
- 61: Federkontakt
- 62: Gegenkontakt zu 61
- 63: Klemmfeder
- 64: Kante von 04

## Patentansprüche

1. Elektrische Anschlussdose für ein Photovoltaikmodul mit einem Dosensockel mit zumindest einem ersten und einem zweiten positiven Kontakt zur Kontaktierung des Pluspols des Photovoltaikmoduls und zumindest einem ersten und einem zweiten negativen Kontakt zur Kontaktierung des Minuspols des Photovoltaikmoduls und einem Dosendeckel mit zumindest einem positiven Gegenkontakt und zumindest einem negativen Gegenkontakt, wobei die Gegenkontakte die polungsgleichen Kontakte nach Aufsetzen des Dosendeckels auf den Dosensockel in zumindest einer Aufsatzstellung kontaktieren, und mit einem mit dem zumindest einem positiven Gegenkontakt verbundenen positiven Anschlusskabel und einem mit dem zumindest einen negativen Gegenkontakt verbundenen negativen Anschlusskabel, die unter einer festen Abgangsrichtung am Dosendeckel befestigt sind,
**DADURCH GEKENNZEICHNET, DASS**
der Dosendeckel (04) in zwei oder mehr verschiedenen Aufsatzstellungen (I, II, III, IV) auf den Dosensockel (03) aufsetzbar ist, wobei für jede Aufsatzstellung (I, II, III, IV) ein positiver Kontakt (05) und ein negativer Kontakt (08) im Dosensockel (03) vorgesehen sind, und dass die Kontakte (05, 08) im Dosensockel (03) und die Gegenkontakte (23, 24) im Dosendeckel (04) so positioniert sind, dass in jeder Aufsatzstellung (I, II, III, IV) des Dosendeckels (04) auf dem Dosensockel (03) der positive Gegenkontakt (23) im Dosendeckel (4) mit einem der positiven Kontakte (05) im Dosensockel (03) und der negative Gegenkontakt (24) im Dosendeckel (04) mit einem der negativen Kontakte (08) im Dosensockel (03) elektrisch kontaktierbar ist, wobei die Aufsatzstellung (I, II, III oder IV) des Dosendeckels (04) auf dem Dosensockel (03) nach einer vorgegebenen Ausrichtung der Anschlusskabel (30, 32) zum Photovoltaikmodul (02) auswählbar ist.

2. Elektrische Anschlussdose nach Anspruch 1,
**DADURCH GEKENNZEICHNET, DASS**
die Kontakte (05, 08) oder die Gegenkontakte (23, 24) als federnde Stiftkontakte (18) ausgebildet sind.

3. Elektrische Anschlussdose nach Anspruch 1 oder 2,
**DADURCH GEKENNZEICHNET, DASS**
der Dosendeckel (04) mit dem Dosensockel (03) in der ausgewählten Aufsatzstellung (I, II, III oder IV) form- oder kraftschlüssig fest verbunden ist.

4. Elektrische Anschlussdose nach zumindest einem der Ansprüche 1 bis 3,
**DADURCH GEKENNZEICHNET, DASS**
die verschiedenen Aufsatzstellungen (I, II, III, IV) durch Passstifte (46) oder durch eine geometrische Passform zwischen Dosendeckel (04) und Dosensockel (03) festgelegt sind.

5. Elektrische Anschlussdose nach Anspruch 4,
**DADURCH GEKENNZEICHNET, DASS**
die geometrische Passform zwischen einer umlaufenden Wandung (36) des Dosensockels (03) und einer umlaufenden Wandung (34) des Dosendeckels (04) erzeugt ist, wobei die Wandung (34) des Dosendeckels (04) mit einer Innenseite oder Außenseite (49) eine Außenseite oder Innenseite (50) der Wandung (36) des Dosensockels (03) berührt oder beide Wandungen (34, 36) stirnseitig aufeinander stoßen und zueinander komplementäre Absätze (37, 38) oder Federn (45) und Nuten (44) aufweisen.

6. Elektrische Anschlussdose nach Anspruch 4 oder 5,
**DADURCH GEKENNZEICHNET, DASS**
Dosensockel (03) und Dosendeckel (04) eine regelmäßige geometrische Passform mit n>2 Ecken (17, 26) für n verschiedene, jeweils um 360°/n-Grad zueinander verdrehte Aufsatzstellungen (I, II, III, IV) aufweisen.

7. Elektrische Anschlussdose nach Anspruch 6,
**DADURCH GEKENNZEICHNET, DASS**
Dosensockel (03) und Dosendeckel (04) in der regelmäßigen geometrischen Passform mit n=4 eines Quadrats (20) für vier verschiedene, jeweils um 90° verdrehte Aufsatzstellungen (I, II, III, IV) ausgebildet sind.

8. Elektrische Anschlussdose nach Anspruch 7,
**DADURCH GEKENNZEICHNET, DASS**
der als Quadrat (20) ausgebildete Dosensockel (03) in jeder Ecke (17) ein Paar (16) aus einem positiven Kontakt (05) und einem negativen Kontakt (08) und der als Quadrat (20) ausgebildete Dosendeckel (04) nur in einer Ecke (26) ein Paar (25) aus dem positiven Gegenkontakt (23) und dem negativen Gegenkontakt (24) aufweist.

9. Elektrische Anschlussdose nach Anspruch 8,
**DADURCH GEKENNZEICHNET, DASS**
das positive Anschlusskabel (30) und das negative Anschlusskabel (32) von dem als Quadrat (20) ausgebildeten Dosendeckel (04) von der der Ecke (26) mit dem Paar (25) aus dem positiven Gegenkontakt (23) und dem negativen Gegenkontakt (24) gegenüberliegenden Wandung (34) abgeht.

10. Elektrische Anschlussdose nach Anspruch 6,
**DADURCH GEKENNZEICHNET, DASS**
Dosensockel (03) und Dosendeckel (04) in der regelmäßigen geometrischen Form mit n=8 eines Oktogons (52) für acht verschiedene, jeweils um 45° verdrehte Aufsatzstellungen ausgebildet sind.

11. Elektrische Anschlussdose nach Anspruch 10,
**DADURCH GEKENNZEICHNET, DASS**
der als Oktogon (52) ausgebildete Dosensockel (03) vor jeder Kante (53) ein Paar (16) aus einem positiven Kontakt (05) und einem negativen Kontakt (08) und der als Oktogon (52) ausgebildete Dosendeckel (04) nur vor einer Kante (64) ein Paar (25) aus dem positiven Gegenkontakt (23) und dem negativen Gegenkontakt (24) aufweist.

12. Elektrische Anschlussdose nach Anspruch 11,
**DADURCH GEKENNZEICHNET, DASS**
das positive und das negative Anschlusskabel (30, 32) von dem als Oktogon (52) ausgebildeten Dosendeckel (04) von der der Kante (64) mit dem Paar (25) aus dem positiven Gegenkontakt (23) und dem negativen Gegenkontakt (24) gegenüberliegenden Wandung (34) abgeht.

13. Elektrische Anschlussdose nach Anspruch 6,
**DADURCH GEKENNZEICHNET, DASS**
Dosensockel (03) und Dosendeckel (04) in der regelmäßigen geometrischen Form mit n=∝ eines Kreises (56) für unendlich viele Aufsatzstellungen und die unendlich vielen positiven Kontakte (05) als positive Ringkontaktbahn (57) und die unendlich vielen negativen Kontakte (08) als negative Ringkontaktbahn (58) ausgebildet sind, wobei die beiden Ringkontaktbahnen (57, 58) konzentrisch zueinander angeordnet sind.

14. Elektrische Anschlussdose nach zumindest einem der Ansprüche 1 bis 12,
**DADURCH GEKENNZEICHNET, DASS**
alle n positiven Kontakte (05) und alle n negativen Kontakte (08) mittels kreuzbaren Drähten (21, 29) oder kreuzungsfreien Leiterbahnen (54, 55) parallel oder in Reihe geschaltet sind.

15. Elektrische Anschlussdose nach zumindest einem der Ansprüche 1 bis 14,
**DADURCH GEKENNZEICHNET, DASS**
Bypassdioden (41) für eine elektrische Verschaltung (59) des Pluspols (07) mit dem Minuspol (10) des Photovoltaikmoduls (02) vorgesehen sind, die auf einer gegenüber dem Dosendeckel (04) verdreh- oder umsteckbaren Platine (60) im Dosendeckel (04) angeordnet sind, wobei die Platine (60) bei der ausgewählten Aufsatzstellung (I, II, III oder IV) des Dosendeckels (04) auf den Dosensockel (03) nach der vorgegebenen Verschaltung (59) ausrichtbar ist.
